## Europäisches Patentamt
## European Patent Office
## Office européen des brevets

(11) Numéro de publication: **0 172 043**
**B1**

# FASCICULE DE BREVET EUROPÉEN

(45) Date de publication du fascicule du brevet:
18.05.88

(51) Int. Cl.⁴: **H 02 K 3/18,** H 02 K 15/04

(21) Numéro de dépôt: **85401164.0**

(22) Date de dépôt: **13.06.85**

(54) **Ensemble de bobines d'inducteur de machine electrique tournante.**

(30) Priorité: **26.07.84 FR 8411844**

(43) Date de publication de la demande:
**19.02.86 Bulletin 86/8**

(45) Mention de la délivrance du brevet:
**18.05.88 Bulletin 88/20**

(84) Etats contractants désignés:
**DE GB IT**

(56) Documents cité:
**AT-C-124 543**
**FR-A-1 198 390**
**FR-A-1 317 071**
**FR-A-2 417 878**
**GB-A-877 762**
**US-A-3 452 230**

(73) Titulaire: **DUCELLIER ET CIE, 3/5 Voie Félix Eboué,
F-94000 Creteil (FR)**

(72) Inventeur: **Larrauri, Alexandre, Les Costilles,
F-63570 Brassac Les Mines (FR)**

(74) Mandataire: **Habert, Roger, VALEO Service
Propriété Industrielle 21 rue Auguste Blanqui,
F-93406 Saint- Ouen (FR)**

LIBER, STOCKHOLM 1988

## Description

La présente invention concerne un ensemble de bobines d'inducteur de machine électrique tournante notamment pour démarreur de véhicule automobile.

Les inducteurs de tels démarreurs sont constitués généralement de bobines de forme appropriée aux dimensions des masses polaires, et dont les spires de conducteurs en fil plat sont isolées entre elles par un isolant papier, ou autre, et maintenue ensemble par un ruban adhésif. Les bobines ainsi obtenues sont ensuite conformées pour épouser la forme intérieure de la carcasse de la machine autour des masses polaires, puis immergées dans un bain plastifiant qui, après polymérisation assure le maintien définitif.

Il en résulte parfois une rupture du ruban adhésif lors du cambrage des bobines et conséquemment une augmentation notable de l'encombrement desdites bobines. Il devient alors impossible d'effectuer l'assemblage de l'ensemble du démarreur.

Il est connu dans FR-A-2 466 896 un procédé d'immobilisation des spires formant les bobines qui consiste à poser le ruban adhésif sur les bobines préalablement cambrées es suivant la forme de leur support, l'ensemble étant ensuite plongé dans un bain plastifiant. Bien que ce procédé donne des résultats satisfaisants il nécessite une mise en oeuvre importante et conséquemment entraîne un prix de revient élevé.

La présente invention a pour but de remédier à ces inconvénients et concerne à cet effet un ensemble de bobines d'inducteur de machine électrique tournante, notamment pour démarreur de véhicules automobiles dont chaque bobine est réalisée à partir d'une bande conductrice enroulée en spires maintenues immobiles les unes par rapport aux autres par des moyens mécaniques, ensemble caractérisé en ce que l'extrémité de la spire intérieure d'au moins une des bobines est cambrée en forme d'étrier dans lequel est pincé l'ensemble des spires constitutives de la bobine.

La description qui va suivre en regard des figures annexées fera mieux comprendre comment l'invention peut être réalisée.

La figure 1 représente en plan un ensemble de bobines d'inducteur conforme à l'invention.

La figure 2 représente, suivant la coupe II II de la figure 1, le maintien des spires de bobines par un étrier de pincement.

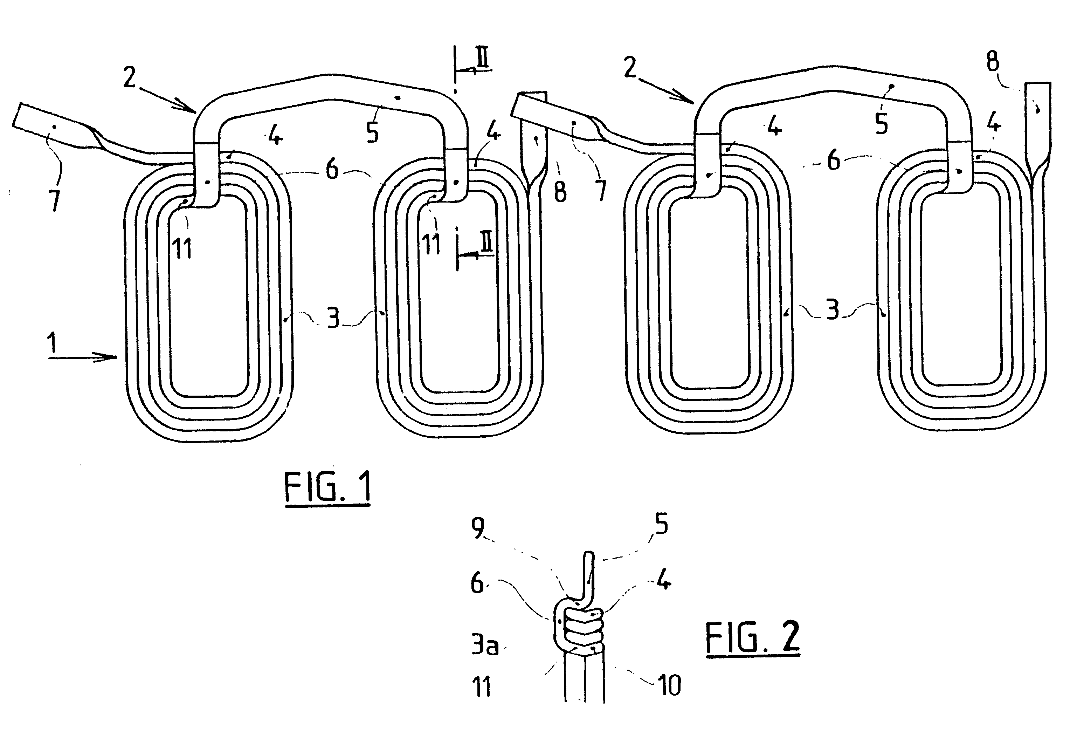

L'ensemble inducteur 1 représenté à la figure 1 est constitué de façon connue de quatre bobines 3 reliées entre elles qui sont réalisées entre elles qui sont réalisées à partir d'une bande de métal conducteur enroulée en spires séparées par des isolants et maintenues immobiles les unes par rapport aux autres par des moyens mécaniques.

La bande conductrice présente de préférence une séction droite telle qu'après bobinage, les spires formant les bobines s'encastrent les unes dans les autres et peut se présenter notamment sous forme de chevron, tel que représenté à la figure 2, ou sous forme d'arc de cercle ou de pontet tel que dans FR-A-2 417 878.

Conformément à l'invention l'extrémité de la spire intérieure 11 de la bobine 3, représentée à la figure 2 est cambrée en forme d'étrier 6 qui maintient immobiles les spires entre elles par leur pincement entre les branches 9 et 10 de l'étrier 6 dont la partie centrale est plaquée contre une des tranches 3a des spires, et dont les branches 9 et 10 sont conformées sur la forme extérieure en chevron de la bande conductrice.

Deux bobines 3 consécutives sont avantageusement maintenues entre elles par un pontet 5 qui relie les étriers 6 des bobines. Ce pontet est réalisé de matière avec la paire de bobines 2 ainsi obtenue.

Afin de faciliter la liaison de deux paires de bobines 2 pour former un ensemble inducteur 1, les deux paires de bobines 2 sont identiques et leurs extrémités libres 7 et 8 sont cambrée es et dirigées à plat de façon à faciliter la jonction électrique de l'extrémité libre 7 d'une des paires de bobines 2 avec l'extrémité libre 8 de l'autre paire de bobines.

Un tel ensemble est alors mis en forme par cambrée et plongé dans un bain plastifiant de façon connue.

## Revendications

1. Ensemble de bobines d'inducteur de machine électrique tournante, notamment pour démarreur de véhicules automobiles dont chaque bobine (3) est réalisée à partir d'une bande conductrice enroulée en spires maintenues immobiles les unes par rapport aux autres par des moyens mécaniques, ensemble caractérisé en ce que l'extrémité de la spire intérieure (11) d'au moins une des bobines (3) est cambrée en forme d'étrier (6) dans lequel est pincé l'ensemble des spires constitutives de la bobine (3).

2. Ensemble selon la revendication 1 caractérisé en ce que l'étrier (6) comporte deux branches (9 et 10) conformées sur la forme extérieure de la bande conductrice qui présente une section droite telle qu'après bobinage, les spires formant les bobines s'encastrent les unes dans les autres.

3. Ensemble selon la revendication 1 caractérisé en ce que, deux bobines (3) consécutivs sont reliées par un pontet (5) de matière qui relie les étriers (6) qui pincent les spires des deux bobines (3).

4. Ensemble selon les revendications 1 et 3 caractérisé en ce qu'il est formé de deux paires identiques (2) de bobines (3).

5. Ensemble selon les revendications 1 et 4 caractérisé en ce que les extrémités libres (7 et 8) de chaque paire (2) de bobines (3) sont cambrées et dirigées à plat de manière talle que l'ensemble inducteur (1) soit réalisé par la jonction électrique de deux paires identiques (2) de bobines (3).

## Patentansprüche

1. Spulensatz für die Erregerwicklung einer rotierenden elektrischen Maschine, insbesondere für einen Anlasser für Kraftfahrzeuge, bei dem jede Spule (3) aus einem elektrisch leitfähigen Band mit Windungen gewickelt ist, die durch mechanische Mittel gegeneinander fixiert sind, dadurch gekennzeichnet, daß das Endstück der inneren Windung (11) wenigstens einer der Spulen (3) in die Form eines Bügels (6) gebogen ist, in dem alle die Spule (3) bildenden Windungen zusammengepreßt sind.

2. Spulensatz nach Anspruch 1, dadurch gekennzeichnet, daß der Bügel (6) zwei Schenkel (9, 10) aufweist, die an die äußere Gestalt des elektrisch leitfähigen Bandes angepaßt sind, welches von solchem Querschnitt ist, daß nach dem Wickeln die die Spulen bildenden Windungen ineinander geschachtelt sind.

3. Spulensatz nach Anspruch 1, dadurch gekennzeichnet, daß zwei aufeinanderfolgende Spulen (3) durch eine mit ihnen einstückige Brücke (5) verbunden sind, welche die die Windungen der beiden Spulen (3) zusammenpressenden Bügel (6) miteinander verbindet.

4. Spulensatz nach den Ansprüchen 1 und 3, dadurch gekennzeichnet, daß er von zwei gleichen Paaren (2) Spulen (3) gebildet ist.

5. Spulensatz nach den Ansprüchen 1 und 4, dadurch gekennzeichnet, daß die freien Endstücke (7, 8) jedes Paares (2) Spulen (3) gebogen und flach so weggeführt sind, daß die Erregerwicklung (1) durch elektrisches Verbinden von zwei gleichen Paaren (2) Spulen (3) hergestellt wird.

## Claims

1. An induction coil assembly for a turning electrical machine in particular for an automobile starter in which each coil (3) is made from a conducting band wound in spirals held immovable with respect to one another by mechanical means, the assembly being characterized in that the extremity of the internal spiral (11) of at least one of the coils (3) is bent into the shape of a stirrup (6) into which is pinched the whole group of spirals constituting the coil (3).

2. An assembly according to Claim 1 characterized in that the stirrup (6) has two arms (9 and 10) made in the external shape of the conducting band and has a cross section such that after winding the spirals forming the coil fit together inside one another.

3. An assembly according to Claim 1 characterized in that two consecutive coils (3) are joined by a bridge (5) of material which joins the stirrups (6) which pinch the spirals of the two coils (3).

4. An assembly according to Claim 1 and 3 characterized in that it is made of two identical pairs (2) of coils (3).

5. An assembly according to Claim 1 and 4 characterized in that the free ends (7 and 8) of each pair (2) of coils (3) are bent and turned to be flat in such a way that the induction assembly (1) is made by the electrical connection of two identical pairs (2) of coils (3).

FIG. 1

FIG. 2

0172043